# EUROPÄISCHE PATENTANMELDUNG

(11) **EP 3 985 133 A2**
(43) Veröffentlichungstag der Anmeldung: **20.04.2022**
(21) Anmeldenummer: 21193005.2
(22) Anmeldetag: 25.08.2021
(51) Int. Cl.: C21D 1/673, C21D 1/34, C21D 1/42, C21D 8/00, C21D 9/00, C21D 9/46, C21D 9/48, H05B 3/00, H05B 6/00, F27B 9/06, F27D 99/00, B21D 22/02, H05B 6/10

(54) **VERFAHREN ZUR HERSTELLUNG EINER STAHLPLATINE SOWIE TEMPERIERSTATION**

(30) Priorität: 14.10.2020 DE 102020127057
(71) Anmelder: Benteler Automobiltechnik GmbH, 33102 Paderborn (DE)
(72) Erfinder: Erfling, Cordt, 33104 Paderborn (DE); Kettler, Markus, 33189 Schlangen (DE); Rabe, Frank, 32120 Hiddenhausen (DE); Schneider, Dimitri, 33758 Schloß Holte-Stukenbrock (DE)
(74) Vertreter: Osterhoff, Utz

(57) **Zusammenfassung**

Die vorliegende Erfindung betrifft ein Verfahren sowie eine Vorrichtung zum Temperieren von Stahlplatinen (2). Hierbei werden erfindungsgemäß mehrere Temperierstationen (5, 6) eingesetzt, um die Stahlplatinen (2) stufenweise mit geringen Temperaturgradienten zu erwärmen.

## Beschreibung

Die vorliegende Erfindung betrifft ein Verfahren zum Erwärmen einer Stahlplatine gemäß den Merkmalen im Oberbegriff von Anspruch 1.

Die vorliegende Erfindung betrifft eine Temperierstation zum Einsatz in einem Warmumform- und Presshärteprozess gemäß den Merkmalen im Oberbegriff von Anspruch 8.

Aus dem Stand der Technik ist es bekannt, insbesondere zur Herstellung von Automobilbauteilen die sogenannte Warmumform- und Presshärtetechnologie anzuwenden. Hierbei werden härtbare Stahllegierungen eingesetzt, beispielsweise Bormanganstahl, welche über eine Temperatur zumindest partiell oberhalb der Austenitisierungstemperatur erwärmt werden. Die Austenitisierungstemperatur wird auch AC3 Temperatur genannt und beträgt je nach Stahlsorte über 900° C.

Eine so erwärmte Platine wird im Anschluss im warmen Zustand in eine Presse transferiert und dann annähernd bei AC3 Temperatur umgeformt und unmittelbar im Anschluss danach derart rasch abgekühlt bzw. abgeschreckt, dass eine Gefügeumwandlung stattfindet und sich ein gehärtetes Gefüge einstellt.

Entsprechende Herstellungsverfahren sind beispielsweise aus der EP 2 907 881 B1, aus der EP 3 530 760 A1 sowie der EP 3 276 012 A1 bekannt.

Zudem wird hierbei für die Erwärmung eine sogenannte Kontakterwärmung eingesetzt. Hierbei werden Kontakttemperierstationen verwendet, um die Platine auf eine Temperatur zumindest bereichsweise größer AC3 zu erwärmen.

Aufgrund des starken Aufheizens der Platine innerhalb kürzester Zeit von anfänglich Raumtemperatur auf über 900° C werden die Temperierstationen, konkret die eingesetzten Heizplatten aufgrund der Ausdehnungskräfte der Platine selbst (beim Erwärmen) belastet.

Aufgabe der vorliegenden Erfindung ist es daher, ausgehend vom Stand der Technik eine Erwärmungsmöglichkeit zu schaffen, bei welcher eine jeweilige Platine partiell individuell und effektiv bei verkürzter Aufheizdauer temperiert werden kann.

Die zuvor genannte Aufgabe wird erfindungsgemäß mit einem Verfahren zur Erwärmung einer Stahlplatine gemäß dem Merkmal im Anspruch 1 gelöst.

Ein gegenständlicher Teil der Aufgabe wird erfindungsgemäß mit einer Temperierstation zum Einsatz in einem Warmumform- und Presshärteprozess mit den Merkmalen im Anspruch 8 gelöst.

Erfindungsgemäß ist vorgesehen, dass als Erwärmungsstation in einer Warmformlinie mehrere Temperierstationen hintereinander angeordnet sind.

Bevorzugt sind alle Temperierstationen als Kontakttemperierstationen ausgebildet. Es kann jedoch auch zunächst eine Erwärmung, beispielsweise homogen auf eine Temperatur stattfinden zur Durchlegierung einer metallischen Beschichtung, insbesondere einer AISi-Beschichtung als intermetallische Phase, dies kann bspw. mit einem Durchlaufofen oder Etagenofen geschehen.

Grundsatzidee ist es jedoch, dass mindestens zwei, bevorzugt drei, insbesondere vier in Reihe hintereinander geschaltete Temperierstationen eine stufenweise Erwärmung durchführen mit einem jeweiligen Temperaturdelta von weniger als 300° C, insbesondere weniger als 250° C, ganz besonders bevorzugt weniger als 200° C.

Durch die einzelnen Erwärmungsschritte werden unter anderem zwei wesentliche Vorteile erreicht. Zum einen wird die Zeit verkürzt, in welcher pro Station die Temperatur erhöht wird. Es muss somit nicht beispielsweise in nur einer Station von Umgebungstemperatur auf über 900° C erwärmt werden. Hingegen muss pro Temperierstation ein Temperaturdelta von weniger als 300° C überwunden werden.

Die Zeit, die hierfür pro Station benötigt wird, ist somit kürzer. Mehrere hintereinander geschaltete Stationen können somit in einer kürzeren Taktzeit jeweils die Platinen erwärmen. Insgesamt kann somit die Taktzeit auf mehrere Temperierstationen aufgeteilt werden und dadurch bedingt absolut gesehen, verringert werden. Insbesondere können Taktzeiten kleiner 20 Sekunden zur Temperierung pro Temperierstation realisiert werden.

Ein zweiter wesentlicher Vorteil ist, dass ein nur geringeres Temperaturdelta pro Temperierstation eingestellt wird und somit die thermische Dehnung pro Temperierstation, insbesondere eine zu temperierende Platine kontaktierende Werkzeugkomponenten aufgrund der erreichten Temperaturunterschiede in jeder Temperierstation möglichst geringgehalten sind.

Hierdurch kann insbesondere ein optimaler Temperaturübergang bei Kontakterwärmung realisiert werden, da sich der voreingestellte Anpressdruck über den Erwärmungszeitraum aufgrund von geringen Temperaturdehnungen unwesentlich verändert. Ein optimal eingestellter Anpressdruck pro Temperierstation ist jedoch notwendig, da somit gewährleistet ist, dass während der Zeit der Kontakterwärmung ein optimaler Wärmeübergang von Temperierplatte der Temperierstation an die zu erwärmende Platine stattfindet.

Im Sinne der Erfindung ist es jedoch auch möglich, eine Vorerwärmungsstation bereitzustellen. Beispielsweise kann somit auf 500° C bis 650° C vorerwärmt werden bzw. ein davor geschaltetes Durchlegieren einer Vorbeschichtung, z. B. AlSi-Vorbeschichtung, mit der Platine erreicht werden und dann das Vorerwärmen auf ca. 500° C zunächst als Zwischenkühlen stattfindet. Dies erfolgt besonders bevorzugt auf ca. 550 bis 650° C. Das Vorerwärmen kann auf eine Ausgangstemperatur von 500° C bis 650° C in einem Ofen erfolgen.

Im Fall von vorbeschichteten Platinen, wie z. B AISi-Beschichtung, kann die Platine zunächst austenitisiert werden und dabei mit dem Stahlgrundmaterial unter Bildung von intermetallischen Phasen durchlegiert werden, und anschließend im selben Ofen oder einem nachgelagerten Transfer an oder mit Luft abgekühlt werden auf die genannte Vorwärmtemperatur von ca. 500° C bis 650° C.

Dies kann beispielsweise in einem Durchlaufofen oder auch in einem Etagenofen stattfinden. Im Anschluss daran folgen dann mindestens zwei Temperierstationen, welche beispielsweise von 600° C auf 775° C erwärmt sowie eine zweite Temperierstation, die von 750 bis 775° C auf größer gleich 900° C erwärmt. Mithin pro Temperierstation ein Temperaturdelta von weniger als 300° C, insbesondere weniger als 250° C, ganz besonders bevorzugt, weniger als 200° C überwunden wird, so dass mit der jeweiligen Kontakterwärmung eine nur geringe thermische Ausdehnung der Platine in der jeweiligen Temperierstation hervorgeht und somit ein optimal voreingestellter Anpressdruck ausgenutzt werden kann.

Eine jeweilige Temperierstation kann im Sinne der Erfindung beispielsweise durch zwei auf gegenüberliegenden Seiten angeordneten Temperierplatten ausgebildet sein. Beide Temperierplatten können aktiv geheizt sein. Es kann jedoch auch nur eine Temperierplatte aktiv geheizt sein, wohingegen die andere Temperierplatte entweder als isolierte Gegenlage oder als passiver Gegenhalter angeordnet ist.

Insbesondere bei partieller Temperierung können einzelne Bereiche der jeweiligen Temperierplatte geheizt sein. Es können auch Bereiche derart ausgespart sein, dass kein Anlagenkontakt stattfindet und/oder dass in Bereichen, die nicht erwärmt werden sollen, Isolierwerkstoff oder Kühlmittel angeordnet sind.

Ein weiterer Aspekt der Erfindung sieht vor, dass die Temperierplatte selbst einen zugeordneten Heizleiter aufweist. Der Heizleiter ist insbesondere in der Temperierplatte selbst eingebracht. Besonders bevorzugt ist hierzu die Temperierplatte aus nicht magnetischem Werkstoff bzw. amagnetischem Werkstoff hergestellt. Es kann jedoch auch eine Temperierplatte aus magnetischem Werkstoff verwendet werden. Der Heizleiter erwärmt die Temperierplatte selbst. Diese Erwärmung kann sowohl aufgrund von Wärmeleitung des Heizleiters selbst erfolgen, jedoch auch induktiv. Dies bedeutet, dass der Heizleiter die Temperierplatte selbst aufgrund seiner Eigenerwärmung und Wärmeleitung vom Heizleiter an die Temperierplatte erwärmt. Optional ergänzend kann der Heizleiter selbst auch die Temperierplatte induktiv, das heißt, mittels induzierter Wirbelstromverluste, erwärmen. Die Temperierplatte selbst erwärmt dann die Platine aufgrund von Wärmeleitung von Temperierplatte an die Platine.

Wiederum optional ergänzend kann erfindungsgemäß auch vorgesehen sein, dass der Heizleiter selbst auch die Platine induktiv erwärmt. Dies bedeutet, dass der Heizleiter während des Kontaktvorganges bestromt ist und somit aufgrund seines elektrischen Feldes eine induktive Erwärmung auch der Platine vornehmen kann.

Somit betrifft die vorliegende Erfindung ein Verfahren zum Anwenden dieser Erwärmungstechnologie, zugleich jedoch auch eine Temperierstation, wobei in einer Temperierplatte ein Heizleiter angeordnet ist und erfindungsgemäß der Heizleiter die Temperierplatte erwärmt und zusätzlich induktiv die Platine erwärmt.

Die Temperierplatte wird nachfolgend auch als Grundkörper bezeichnet.

Um den Grundkörper konduktiv und induktiv zu beheizen, muss die darin eingebettete Mantel-Heizleiter-Schleife gespeist werden mit einer elektrischen Wechselspannung, vorzugsweise mit einer Wechselspannung im Bereich der Mittelfrequenz von 0,5kHz bis 50kHz.

Aufgrund der unvollständigen Schirmung der mit einer elektrischen Wechselspannung gespeisten Mantel-Heizleiter-Schleife streut das magnetische Wechselfeld in die zu erwärmenden Bereiche der Platine aus Stahl und bewirkt auch bewirkt auch dort neben der Temperaturerhöhung durch Wärmeleitung und Wärmestrahlung eine Temperaturerhöhung durch induktive generierte elektrische Wirbelstromstärken.

Durch das Anordnen von wenigstens 3 Mantel-Heizleiter-Schleifen zu einem Induktor lässt sich ein magnetisches Wanderfeld von einer sich ändernden Intensität und Frequenz bzw. Geschwindigkeit erzeugen, welches das Metallgefüge oder deren Körner wälzt (Kneten, Rühren) oder mahlt (Reiben, Rütteln), und somit die Temperatur der erwärmenden Bereiche der Platine durch innere Reibung gleichmäßig steigert.

Es besteht ebenfalls vorhandene Möglichkeit den beheizbaren Grundkörper und/oder die Platine mittels der Induktion über das Temperatur-Niveau des elektrischen Heizleiters hinaus zu erwärmen.

Grund dessen, dass Felder im Allgemeinen sich nicht begrenzen, sondern nur dämpfen lassen, wird eine sich in dem Außenraum des Grundkörpers befindende Platine von einem magnetischen Streufeld durchsetzt. Falls die von dem magnetischen Streufeld in der Platine induzierte Spannung eine elektrische Wirbelstromstärke treibt, welche die Wärme mit einer größeren thermischen Leistung in einem Bereich der Platine erzeugt als dieser Bereich der Platine an die Umgebung abgeben kann, wird dieser Bereich induktiv erwärmt, auch wenn die Platine nicht elektrisch oder stofflich an den Grundkörper geschlossen ist.

Somit ist ein zu erwärmender Bereich einer Platine vorzugsweise in einem kleinstmöglichen Abstand zu einem sich annähernd parallel zu diesem Bereich erstreckenden und mit einer elektrischen Wechselspannung gespeisten Mantelheizleiter anzuordnen. Konkret haben sich Abstände zwischen Platinenoberfläche und Mantelheizleiter von 2 mm bis 50 mm und/oder Abstände zweier Mantelheizleiter zueinander zwischen 5 mm und 100 mm als wirksam erwiesen für eine ausreichend homogene zusätzliche induktive Wärmeeinkoppelung.

Weitere Merkmale, Eigenschaften und Aspekte der Erfindung sind in den nachfolgenden Figuren dargestellt. Bevorzugte Ausgestaltungsvarianten werden in schematischen Figuren erläutert. Diese dienen dem einfachen Verständnis der Erfindung. Es zeigen
- Figur 1: eine erfindungsgemäße Warmformlinie zum Temperieren einer Stahlplatine mit einem Durchlaufofen,
- Figur 2: eine alternative Ausgestaltung mit einem Etagenofen,
- Figur 3: eine Querschnittsansicht,
- Figur 4a und b eine: Längsansicht und Querschnittsansicht einer erfindungsgemäßen Temperierstation und
- Figur 5 ff.: verschiedene Ansichten von Heiztemperierplatten mit Heizleitern.

In den Figuren werden für gleiche oder ähnliche Bauteile dieselben Bezugszeichen verwendet, auch wenn eine wiederholte Beschreibung aus Vereinfachungsgründen entfällt.

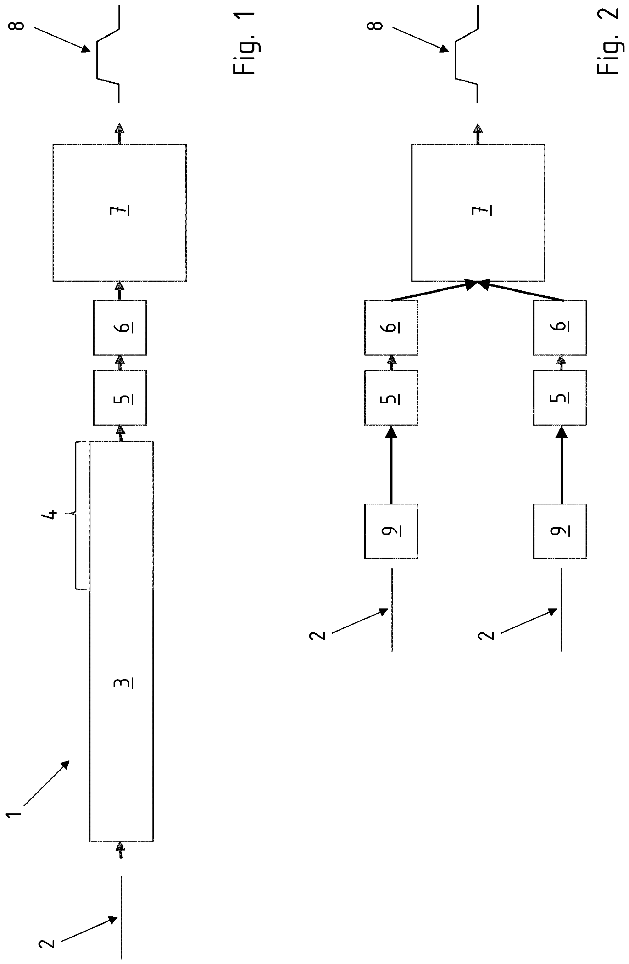

Figur 1 zeigt eine erfindungsgemäße Warmformlinie 1. Hierbei werden zunächst Stahlplatinen 2 bereitgestellt, die in einen Durchlaufofen 3 überführt werden. Am Ende des Durchlaufofens 3 kann ein Bereich einer homogenen Zwischenkühlung 4 stattfinden, gefolgt von zwei Temperierstationen 5, 6 und einem Warmumform- und Presshärtewerkzeug 7. Im Anschluss daran wird ein warmumgeformtes und pressgehärtetes Bauteil 8 aus dem Warmumform- und Presshärtewerkzeug 7 entnommen.

In dem Durchlaufofen 3 wird zunächst eine Stahlplatine 2 eingelegt, welche dann auf eine Temperatur von bevorzugt 500 bis 600° C erwärmt wird. Entweder wird in dem Durchlaufofen 3 zunächst eine Temperierung auf über Austenitisierungstemperatur durchgeführt, um eine Homogenisierung des Stahlmaterials und/oder ein Durchlegieren mit einer Vorbeschichtung herbeizuführen. In diesem Fall findet in einem Bereich eine homogene Zwischenkühlung 4 statt. Bei Entnahme aus dem Durchlaufofen 3 weist dann die Stahlplatine 2 eine Temperatur zwischen bevorzugt 500 bis 600° C auf. Sie wird dann in eine erste Temperierstation 5, gefolgt von einer zweiten Temperierstation 6 überführt. In jeder Temperierstation 5, 6 findet zumindest partiell eine Erwärmung statt über ein Temperaturdelta pro Temperierstation von weniger als 300° C, insbesondere weniger als 250° C, bevorzugt weniger als 200° C statt.

Die Stahlplatine 2 weist dann in bzw. nach der ersten Temperierstation 5 eine Temperatur von bevorzugt 750 bis 775° C auf. Nach der zweiten Temperierstation 6 weist die Stahlplatine 2 zumindest partiell eine Temperatur von größer AC3, mithin größer als 900° C, insbesondere größer als 920° C auf. Im Anschluss daran wird die so partiell temperierte Platine in ein Warmumform- und Presshärtewerkzeug 7 überführt, hier warmgeformt und pressgehärtet.

In Figur 2 wird die Stahlplatine 2 in einen Etagenofen 9 eingelegt. Alternativ kann ein zweiter Etagenofen 9 auf die Bildebene bezogen in der unteren Linie dargestellt angeordnet sein, welche auch als Zwischenpuffer ausgelegt werden kann. In einer jeweils ersten und zweiten Temperierstation 5, 6 findet dann eine jeweilige Kontakterwärmung statt, analog wie oben beschrieben von ca. 500 bis 600° C in mindestens zwei Schritten auf eine Temperatur partiell größer als AC3 Temperatur.

Insgesamt können somit auch in Figur 1, Taktzeiten von unter 30 Sekunden, insbesondere unter 20 Sekunden, pro Temperierstation 5, 6 und somit auf den Gesamtprozess erreicht werden. Im Falle des Ausführungsbeispiels von Figur 2 ist es auch vorstellbar, dass das Warmumform- und Presshärtewerkzeug 7 aus zwei Erwärmungslinien beliefert wird und somit aus der oberen oder unteren Erwärmungslinie bestückt werden kann.

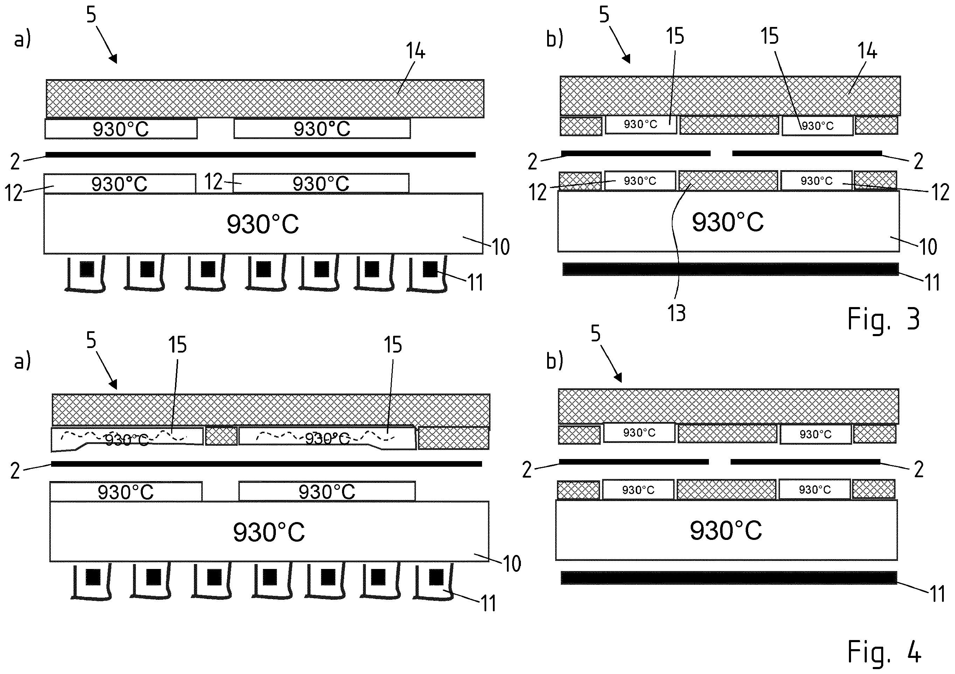

Figuren 3a und b zeigen einen Längs- und einen Querschnitt einer erfindungsgemäßen Temperierstation 5, 6. Dargestellt ist eine untere Temperierplatte 10, wobei unterhalb der Temperierplatte 10 ein Heizleiter 11 angeordnet ist. Der Heizleiter 11 kann auch in die Temperierplatte 10 selbst integriert sein. Die Temperierplatte 10 weist dann überstehende Fortsätze 12 auf, die eine Verlängerung der Temperierplatte 10 selbst darstellten und im geschlossenen Zustand eine dazwischen angeordnete Stahlplatine 2 partiell kontaktieren und somit partiell temperieren, aufgrund von Wärmeleitungen. Der Querschnitt gemäß Figur 3b zeigt, dass zwei Stahlplatinen 2 gleichzeitig in einer Temperierstation 5, 6 angeordnet werden können. Zwischen den einzelnen Fortsätzen 12 kann ein Isoliermaterial 13 angeordnet sein. Auf der gegenüberliegenden Seite ist eine Isoliergegenplatte 14 dargestellt, beispielsweise in Form einer zweiten Temperierplatte. Hierin sind selbst wiederum passive Heizplatten 15 angeordnet, welche durch den dauerhaften Betrieb entsprechend eine Temperatur von Wärmeleitung über die Metallplatine 2 aufweisen, jedoch nicht selbst aktiv geheizt werden müssen.

Figur 4a und b zeigen prinzipiell eine analoge Ausgestaltungsvariante zu Figur 3. Hier ist jedoch im Unterschied zu Figur 3 im Längsschnitt die Möglichkeit gegeben, eine Stahlplatine 2 mit voneinander verschiedenen Wandstärken über deren Längsverlauf zu temperieren. Hierzu sind die oberen Heizplatten 15 mit einem verschiedenen Oberflächenprofil ausgebildet, das sich an den unterschiedlichen Wandstärken der Stahlplatinen anpasst.

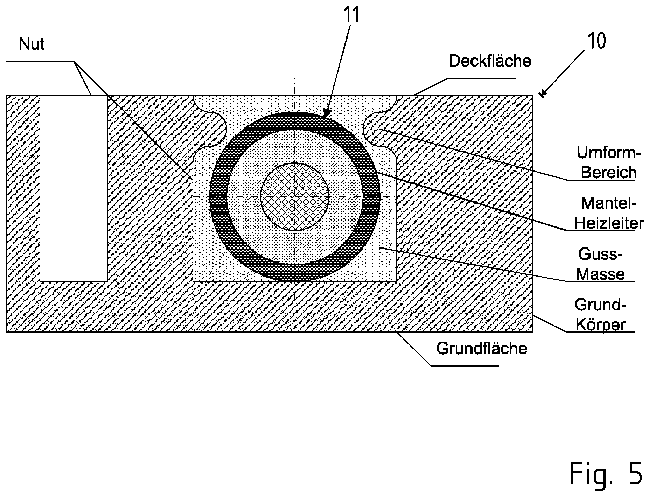

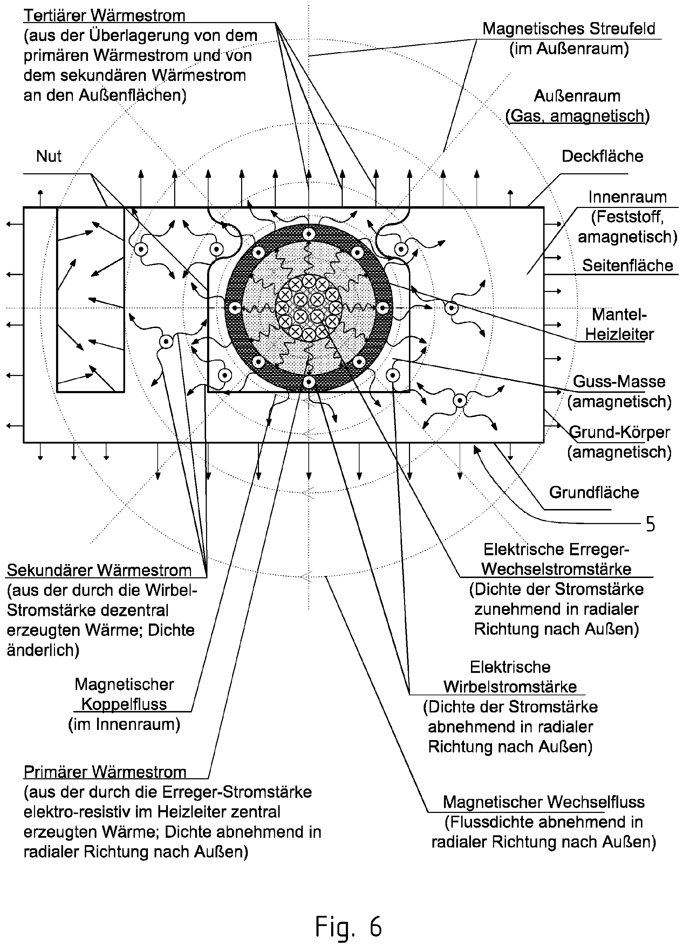

Figur 5 zeigt einen Querschnitt durch eine Temperierplatte 10 mit integriertem Heizleiter 11. Dieser ist im Grundkörper der Temperierplatte 10 angeordnet und dann mit einer Gussmasse ausgegossen, so dass ein Heizleiter 11 in dem Grundkörper fixiert ist. Erfindungsgemäß kann der damit in Figur 6 dargestellte Temperierungseffekt ausübt werden. Zunächst wird ein primärer Wärmestrom durch den Heizleiter 11 selbst erzeugt und an die Temperierplatte 10 abgegeben. Ein sekundärer Wärmestrom wird aufgrund der Wärmestromstärke dezentral innerhalb der Temperierplatte 10 selbst erzeugt und wiederum hier dann an einzelne ergangene Platine 2 abgegeben. Es erfolgt ein tertiärer Wärmestrom aus der Überlagerung von primärem Wärmestrom und sekundärem Wärmestrom an den Außenflächen der Temperierplatte 10. Ergänzt nicht näher dargestellt, kann aufgrund insbesondere des magnetischen Wechselflusses jedoch an einer zu erwärmenden Stahlplatine 2 ebenfalls auch hier eine induktive Temperierung stattfinden.

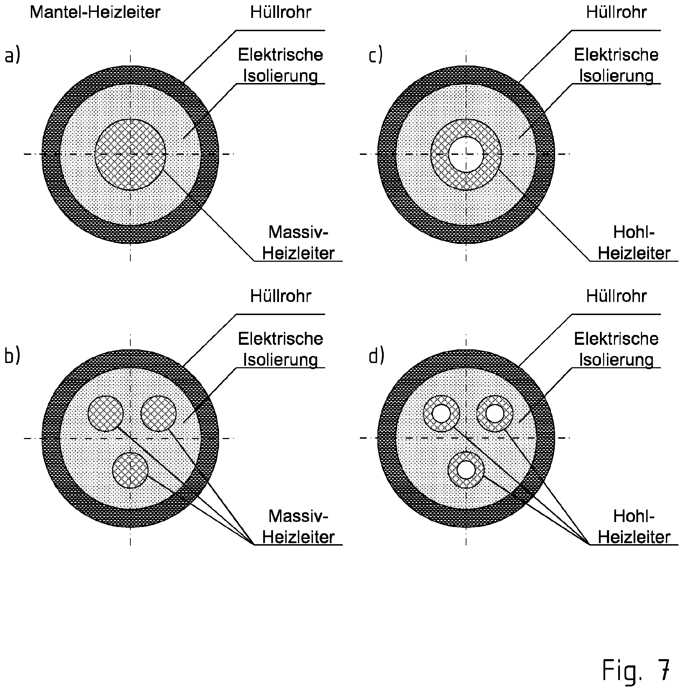

Figur 7a bis d zeigen voneinander verschiedene Querschnittsformen eines Heizleiters 11. Der Heizleiter 11 wird jeweils als Mantelheizleiter in der Temperierplatte 10 selbst angeordnet. Dieser weist ein Hüllrohr, eine elektrische Isolierung und ein darin angeordneter Heizleiter 11 selber. Der Heizleiter 11 kann als Massivheizleiter, in Form von mehreren Heizleitern oder auch als jeweils hohler Heizleiter hergestellt werden. Der Heizleiter 11 selbst wird dann mit einem elektrischen Strom beaufschlagt und erwärmt sich dann insbesondere nach dem Prinzip dargestellt in Figur 6.

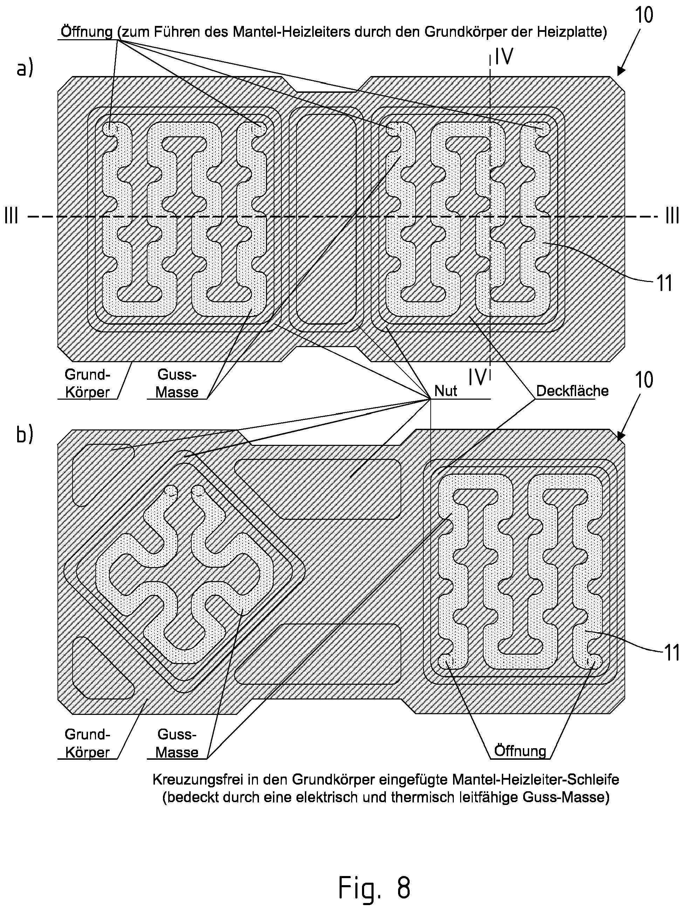

Figur 8a und b zeigen eine jeweilige Draufsicht auf eine erfindungsgemäße Temperierplatte 10. Dargestellt ist, dass der jeweilige Heizleiter 11 in einer verlaufenden Nut angeordnet wird. Diese Nut kann sich beispielsweise nach dem Prinzip eines Mäanders, mithin mäanderförmig bzw. schlangenlinienförmig nur partiell über die jeweilige Fläche der Temperierplatte 10 erstrecken. Somit können die in Figuren 3a bis 4b dargestellten partiellen Bereiche mit jeweils 930° C im Rahmen eines Längsschnittes ausgebildet werden. Eine Längsschnittlinie ist dargestellt gemäß III-III in Figur 8a. Ist der Heizleiter 11 in der Temperierplatte 10 angeordnet, wird dieser mit einer Gussmasse lagefixiert. Der Heizleiter 11 kann dann durch dargestellte Öffnungen auf einer jeweiligen Rückseite 17 durch den Grundkörper der Temperierplatte 10 durchgeführt werden und elektrisch nicht näher dargestellt, angeschlossen werden.

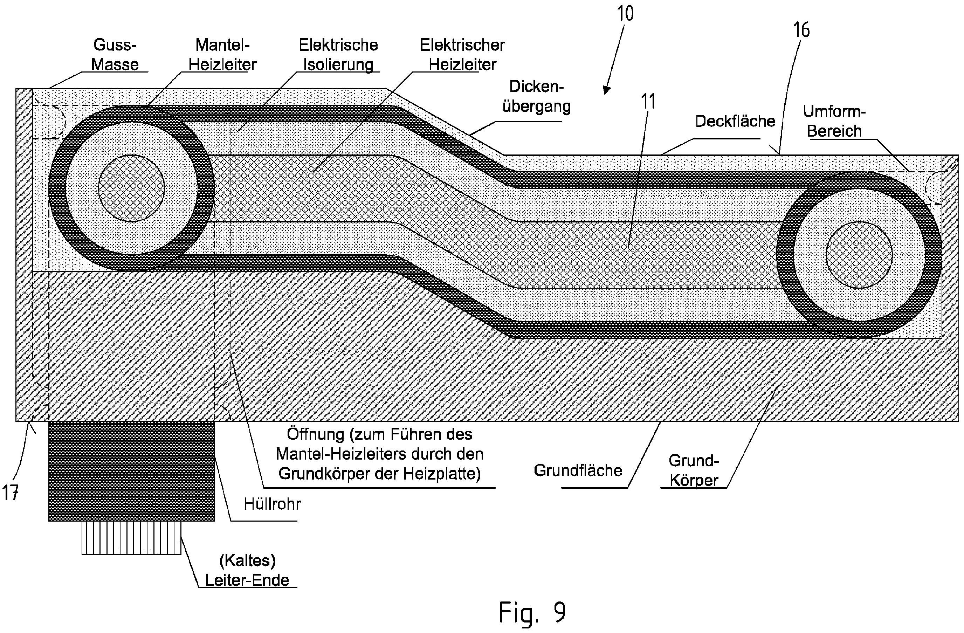

Figur 9 zeigt einen Querschnitt entlang der Schnittlinie IX-IX aus Figur 8a einer Temperierplatte 10. Hier ist der Heizleiter 11 in der Temperierplatte 10 angeordnet. Die Oberfläche 16 der Temperierplatte 10 selber weist einen Dickensprung auf, so dass sogenannte tailored blanks oder gepatchte, das heißt, abschnittsweise doppellagige Stahlplatinen mit unterschiedlichen Wandstärken als Stahlplatinen 2 verarbeitet werden können.

Dargestellt ist auf einer Rückseite 17 ein entsprechendes Leiterende, um den in der Temperierplatte 10 vorhandenen Heizleiter 11, nicht näher dargestellt, elektrisch mit einer Energiequelle zu verbinden.

### Bezugszeichen:

- 1 -: Warmformlinie
- 2 -: Stahlplatine
- 3 -: Durchlaufofen
- 4 -: homogene Zwischenkühlung
- 5 -: Temperierstation
- 6 -: Temperierstation
- 7 -: Warmumform- und Presshärtewerkzeug
- 8 -: Bauteil
- 9 -: Etagenofen
- 10-: Temperierplatte
- 11 -: Heizleiter
- 12 -: Fortsatz
- 13 -: Isoliermaterial
- 14 -: Isoliergegenplatte
- 15 -: Heizplatte
- 16 -: Oberfläche
- 17 -: Rückseite

## Patentansprüche

1. Verfahren zur Herstellung einer erwärmten Stahlplatine (2), insbesondere in ein einem Warmumform- und Presshärteprozess, wobei in Reihe hintereinander verschiedene Temperierstationen (5, 6) angeordnet sind, um die Stahlplatine (2) stufenweise auf zumindest partiell eine Temperatur größer gleich AC3 zu erwärmen, **dadurch gekennzeichnet, dass** pro Temperierstation (5, 6) eine Erwärmung um ein Temperaturdelta von weniger als 300° C stattfindet.

2. Verfahren nach Anspruch 1, **dadurch gekennzeichnet, dass** mindestens drei, insbesondere vier Temperierstationen (5, 6) hintereinander angeordnet sind.

3. Verfahren nach Anspruch 1 oder 2, **dadurch gekennzeichnet, dass** die Temperierstationen (5, 6) mittels Kontakterwärmung betrieben werden, insbesondere durch den Einsatz von Temperierplatten (10).

4. Verfahren nach einem der vorangegangenen Ansprüche, **dadurch gekennzeichnet, dass** die Stahlplatinen (2) mittels eines Transfersystems zwischen den Temperierstationen (5, 6) transportiert werden oder dass zwischen den Temperierstationen (5, 6) ein Manipulator angeordnet ist.

5. Verfahren nach einem der vorangegangenen Ansprüche, **dadurch gekennzeichnet, dass** die Stahlplatine (2) in einer ersten Temperierstation (5) zumindest abschnittsweise mit einer Heizrate von 15 bis 50 K/s erwärmt wird und in einer letzten Temperierstation (6) vor dem Warmumform- und Presshärteprozess mit einer Heizrate von 5 bis 15 K/s erwärmt wird.

6. Verfahren nach einem der vorangegangenen Ansprüche, **dadurch gekennzeichnet, dass** die Stahlplatine (2) durch eine Temperierplatte (10) erwärmt wird und zusätzlich induktiv durch ein Heizmittel erwärmt wird, insbesondere durch einen der Temperierplatte (10) zugeordneten Heizleiter (11).

7. Verfahren nach einem der vorangegangenen Ansprüche, **dadurch gekennzeichnet, dass** beim Schließen der Temperierstation (5, 6) ein Anpressdruck auf die zu erwärmende Stahlplatine (2) aufgebracht wird.

8. Temperierstation zum Einsatz in einem Warmumform- und Presshärteprozess, aufweisend mindestens eine Temperierplatte (10), zur zumindest abschnittsweisen Temperierung einer Stahlplatine (2), wobei in der Temperierplatte (10) ein Heizleiter (11) angeordnet ist, **dadurch gekennzeichnet, dass** der Heizleiter (11) die Temperierplatte (10) erwärmt und zusätzlich induktiv die Stahlplatine (2) erwärmt.

9. Temperierstation nach Anspruch 8, **dadurch gekennzeichnet, dass** eine zweite Temperierplatte (10) als Gegenhalter auf der gegenüberliegenden Seite der Stahlplatine (2) vorhanden ist, wobei die zweite Temperierplatte (10) bevorzugt auch zumindest partiell aktiv beheizbar ist.

10. Temperierstation nach Anspruch 8 oder 9, **dadurch gekennzeichnet, dass** die Temperierplatte (10) aus nicht magnetischem Werkstoff ausgebildet ist.
